# EUROPEAN PATENT SPECIFICATION

(11) **EP 0 458 377 B1**
(45) Date of publication and mention of the grant of the patent: **05.02.1997**
(21) Application number: 91201060.0
(22) Date of filing: 03.05.1991
(51) Int. Cl.: C08G 18/64, C08G 18/08, C08G 18/80, C09D 5/44

(54) **Process for preparing a thermosetting resin composition and a resin system for cathodic electrodeposition**
Verfahren zur Herstellung einer thermohärtenden Zusammensetzung und Harzsystem für kathodische Elektrotauchlacke
Procédé pour la préparation de composition de résine thermodurcissable et système de résine pour une électrodéposition cathodique

(30) Priority: 25.05.1990 GB 9011710
(43) Date of publication of application: 27.11.1991
(73) Proprietor: SHELL INTERNATIONALE RESEARCH MAATSCHAPPIJ B.V., 2596 HR Den Haag (NL)
(72) Inventor: Barnhoorn, Adrianus Johannes Maria, B-1348 Ottignies-Louvain-la-Neuve (BE); Bossaerts, Jan, B-1348 Ottignies-Louvain-la-Neuve (BE)

(56) References cited:
- EP-A- 0 000 086
- EP-A- 0 293 088
- EP-A- 0 313 932
- EP-A- 0 349 873
- DE-A- 3 925 751
- GB-A- 1 060 442
- GB-A- 2 065 126

## Description

The invention relates to a process for preparing a thermosetting resin composition and to a heat-curable thermosetting resin system for cathodic electrodeposition. It is known to provide water-soluble electrodeposition resin binders by aminating epoxy resins. The introduction of tertiary amino groups is favoured and adequate water-solubility is ensured by acidification which converts the amino groups into quaternary ammonium groups. The reaction of the epoxy resin with compounds containing amino groups should normally lead to complete conversion of all epoxy-groups in which adequate curing by heating may be effected by employing blocked isocyanate curing agents, this is sometimes referred to as cure by trans-urethanisation.

For acceptance as bare steel primers in the automotive industries the binders must meet a number of demands which in combination are difficult to achieve: attractive flow, anti-corrosive properties, impact strength and solvent resistance. Whilst certain of the resin systems that are now available in the market do meet these demands there is nevertheless a need for systems that not only meet the aforesaid demands but on top of that also have attractive bath-stability, i.e. at least three months preferably at least six months, together with good cure performance at temperatures of around 130°C. The latter is important to enable the cure of on-line applied coatings of cars that are provided with body-parts made of thermoplastic composites.

The present invention sets out to solve the problem of meeting the additional demands without substantial detriment to any of the listed four demands.

The invention relates to a process for preparing a thermoset resin composition by curing at a temperature of < 160°C a composition comprising:
a) a ketoxime-blocked isophorone diisocyanate, and
b) a water-soluble resin binder which is free from epoxy groups and which has the general formula A-B-(-C-B)ₘ-A, in which m is 1 to 6, A is a tertiary amino group, B is a divalent group of formula -D-O-R-O-(-D-O-R-O-)n-D-, in which n is 0 to 10, D is a group of formula -CH₂-CH(OH)-CH₂- and R is the hydrocarbon residue of an aliphatic or aromatic dihydroxy compound, and C are the same or different divalent organic groups comprising one or two bridging secondary or tertiary amino group(s) linked to B, at least one of the said amino groups attached to C having the formula 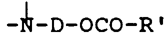 in which R' is C₄ to C₁₆ alkyl and D is as set out herein.

In the process of the present invention particularly preferred curing temperatures applied lie in the range of from 120-140°C and preferred groups R' are C₆-C₁₆ alkyl.

In the process of the invention the resin binder to curing agent weight ratio may vary from 90:10 to 60:40, with weight ratios in between 85:15 and 65:35 being preferred. The curing agent is employed in its monomeric, dimeric or trimeric form. In the latter case the curing agent may also be defined as an isocyanurate derivative carrying three acetoxime blocked isocyanate groups which are linked via an isophorone moiety to the central 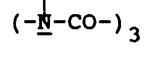 structure. Preferred ketoxime-blocked isophoronediisocyanate (IPDI) curing agents are dialkyloxime-blocked IPDI compounds such as for example acetoxime-, methylethylketoxime-, diethylketoxime-, dipropylketoxime- and propylethylketoxime-blocked IPDI. Some of the most attractive curing agents are IPDI-B1370 and IPDI-B1358, both commercially available from HUELS A.G.

Certain of the resin binders employed in this invention are known from EP-B 86 and EP-B 12463, these references are not concerned with cure at temperatures lower than 160°C with blocked isophorone-diisocyanate.

One of the best resin binders employed in this invention is a product obtained by reacting a diglycidyl ether of 2,2-di-(4,4'-hydroxyphenyl)propane, e.g. EPIKOTE 1001 (EPIKOTE is a trade mark), with diethanolamine (DEOLA), with 3-(N,N-dimethylamino)-1-aminopropane (DMAP) and with an adduct of 1,6-diaminohexane (HD) and CARDURA E10 (CE) (CARDURA is a trade mark), being the glycidyl ester of alpha-branched monocarboxylic acid with 9 to 11 carbon atoms. The resulting product can be schematically represented by the formula 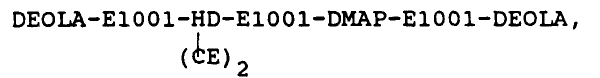 provided the right ratio of reactants is employed, cf. example I hereinbelow.

Similar products can be obtained when substituting other diglycidyl ethers of dihydric phenols, e.g. EPIKOTE 828 or 1007 for EPIKOTE 1001 in the recipe discussed before. Generally speaking any epoxy resin obtained by reacting epichlorohydrin with a di-hydroxy compound, whether aliphatic or aromatic, may be used as base material, albeit digylcidyl ethers of di-(4-hydroxylphenyl)alkanes, particularly 2,2-di(4-hydroxyphenyl)propane are preferred.

As will be clear from the above schematic formula, DEOLA functions as a capping agent by reacting the terminal glycidyl groups in E1001 with secondary amino groups. As a result the glycidyl groups are converted into groups D and the secondary amino groups are converted into tert. amino groups. DMAP and HD-(CE)₂ function as bridging agents to build-up a linear structure comprising a number of moieties derived from epoxy compounds. As a result of the bridging reaction the glycidyl groups of the resin are converted into groups D and the sec. amino groups in HD-(CE)₂ are converted into tert. amino groups. For obtaining the benefits of this invention it is not essential to introduce two different moieties C into the resin binder molecules as set out in the given example in which one group C is a glycidyl ester substituted sec. diamine and the other is a non-glycidyl ester substituted diamine carrying a primary and a tertiary amine group. It will be clear, however, that at least one of the bridging agents should be glycidyl ester substituted.

Preferred capping agents are sec. alkanol amines such as diethanol amine, di n-propanol amine and diisopropanol amine. Such amines will introduce primary hydroxyl groups into the binder resin molecule which is of benefit to obtain fast cure. Other suitable sec. amine capping agents are dimethylamine, diethylamine, dipropylamine, dipentylamine, methyl ethylamine, methyl hexylamine and ethyl-butylamine. If C is an organic group comprising one bridging amino group, the amino group will be tertiary and is linked to two B groups. This is for example the case when the bridging agent is 1-(N,N-dimethylamino)-3-aminopropane (DMAP) or ethanolamine (EOLA). If C is an organic group comprising two bridging amino groups both amino groups may be secondary or tertiary and are connected via an alkyl or aryl moiety. This is for example the case when the bridging agent is 1,2-diaminohexane.

Preferred bridging agents are glycidyl ester N,N'-substituted diamines selected from C₂ to C₁₆ alkylene diamines, such as 1,2-diaminoethane 1,4-diamine-butane,1,6-diamino hexane or 1,12-diaminododecane. Other amines are ethanolamine, triethylenetetramine, diethylene triamine, piperazine, aminoethyl piperazine. Examples of amines containing both primary and sec. or tert. amino groups are 1-(N,N,dimethylamino)-3-aminopropane, 1-(N,methyl-N,ethyl)-3-aminobutane, 1-(N,methyl)-4-(N,hexyl)-4-aminobutane and N,N-bis(3-aminopropyl)-aminomethane.

The resinous binders used in the process of this invention may contain from 1 to 6, preferably from 2 to 4 groups C, derived from the aforesaid glycidyl ester. Usually the weight of such groups varies from about 5 to 40% weight of the resinous binder. Moreover, preferred resinous binders have a hydroxyl content of from 100 to 600 mmol/100 g, more preferably from 200 to 500 mmol/100 g, for improved corrosion resistance on bare steel. The term hydroxyl content refers to the combined content of sec. and primary hydroxyl groups.

The invention also relates to a novel heat curable thermosetting resin system for cathodic electrodeposition comprising
a) a ketoxime-blocked isophorone diisocyanate, and
b) an aqueous solution of a water-soluble resin binder which is essentially free from epoxy groups and which has the general formula A-B-(-C-B)ₘ-A, in which m is 1 to 6, A is a tertiary amino group, B is a divalent group of formula -D-O-R-O-(-D-O-R-O-)ₙ-D-, in which n is 0 to 10, D is a group of formula -CH₂-CH(OH)-CH₂- and R is the hydrocarbon residue of an aliphatic or aromatic dihydroxy compound, and C are the same or different divalent organic groups comprising one or two bridging secondary or tertiary amino group(s) linked to B, at least one of the said amino groups attached to C having the formula 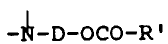 in which R' is C₄ to C₁₆ alkyl and D is as set out herein. Preferred groups R' in the curable thermosetting resin composition of the invention are C₆ to C₁₆ alkyl.

As stated above, the resinous binders are particularly suitable as components of aqueous coating compositions for use in cathodic electrodeposition processes. Suitable aqueous coating compositions comprise 2 to 30%w of the resinous binder. The acid, employed for neutralizing the tert. amino groups, may be inorganic, e.g. hydrochloric or sulphuric acid, or organic e.g. formic, acetic, maleic, citric or lactic acid, with lactic acid being preferred. Usually from 40 to 100% of the amino groups are neutralized by the acid. Suitable amounts of cross-linking agents are from 1 to 50%w, preferably from 15 to 35%w, based on the weight of the resinous binder. The aqueous compositions may also contain other components such as solvents e.g. glycol ethers, pigments, fillers, dispersing agents and stabilizers. A curing catalyst may be included as well, suitable catalysts are tin-compounds such as stannous octoate, stannochloride, stannichloride or stannous oxide, with dibutyl tin dilaurate or dibutyl tin dioctoate being preferred.

The aqueous coating compositions are preferably prepared by dissolving the resinous binder in a solvent such as a glycol ether, adding the cross-linking agent and acid, followed by the addition of water, preferably demineralized water. Values for pH are usually of from 3 to 7. Although the compositions are particularly suitable for coating bare steel substrates they may also be used for coating e.g. phosphatized and galvanized steel substrates.

The invention will be illustrated with reference to the following Examples.

### EXAMPLES

Two resin binders were prepared for evaluation to assess film properties and electrodeposition performance in cure with acetoxime blocked isophorone diisocyanate curing agent IPDI-B1370 ex HUELS, A.G.

The first binder (binder A) was prepared by adding to a solution of EPIKOTE 1001 (283.2 g; 0.6 epoxy equivalent) in ethylene glycol monobutyl ether (161 g), 21 g of diethanol amine (0.2 mole), 10.2 g of 3-(N,N-dimethyl amino)propyl amine (0.1 mole) and 61.6 g of an adduct of 1,6-diamino hexane and glycidyl ester C10E (0.1 mole of adduct). This adduct had been prepared by reacting 1,6-diamino hexane (116 g; 1 mole) with glycidyl ester C10E (500 g; 2 mole) at 80°C for 3 hours. The mixture of the polyether and the amines was reacted by heating first at 85-90°C for 4 hours with stirring, and then at 120°C for 1 hour. The epoxy content was then zero. N content: 1.60 mat./g, OH content 0.56 mole/100 g.

Binder B was prepared by repeating the process for the preparation of binder A using the same ingredients with the exception of 3-(N,N-dimethylamino)propylamine for which instead 6.1 g (0.1 mole) of ethanolamine was used.

Electrodeposition systems were prepared by neutralizing binder A (% N neutralized 45%) with acetic acid, adding curing agent IPDI-B1370 (2.7:1 equivalent ratio), 2%wt (on binder) of dibutyl tin dilaurate catalyst and dimineralized water to produce a slightly hazy solution having a solids content of 15%wt. In two other systems this recipe was repeated now using two different pigment formulations set out in Table I. All systems remained stable, i.e. they showed no phase separation, for a period of more than 8 months.

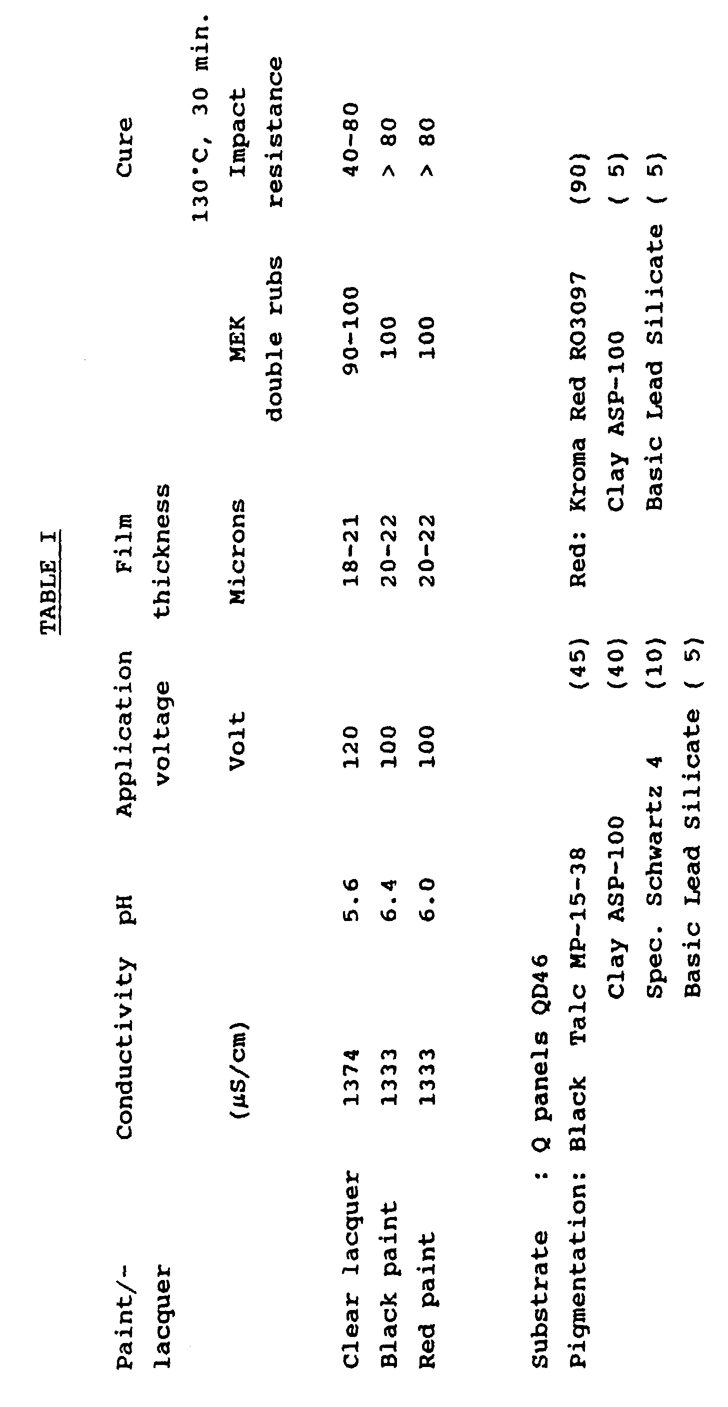

Likewise, film properties were evaluated from solvent borne lacquer systems. Resins A, respectively B, were neutralized with lactic acid (% N neutralization 45%), IPDI-B1370 or IPDI-B1358 (2.7:1 equivalent ratio), dibutyl tin dilaurate catalyst (0.5%wt on solids) and methyl/PROXITOL/Shell Sol A mixture were added to produce a final solids content in a clear lacquer system of 45%wt (PROXITOL and Shell Sol A are registered trademarks). The lacquers were then applied onto steel panels; phosphatized steel (X) panels and Q-panels: R, S and QD.

According to the brochure of the Q-panel company the different types have the following characteristics:
- Type R =: a dull matt finish using roughened rolls, representative for automotive and appliance steel,
(0.8 mm thick; 0.9-1.3 micrometers roughness)
- Type S =: as type R, except that one side is sanded, (0.8 mm thick; 0.4-0.65 micrometers roughness)
- Type QD =: smooth bright finish by rolling with ground rolls, recommended for measuring gloss and colour in general applications, (0.5 thick; 0.2-0.3 micrometers roughness.

These different types were used to see if differences in substrate have a strong influence on the film properties.

The panels were stoved for 30 mins. at 130°C and the resulting coatings (17-20 microns) were tested for MEK-double rubs and impact resistance. The evaluation results are given in Table II hereinbelow.

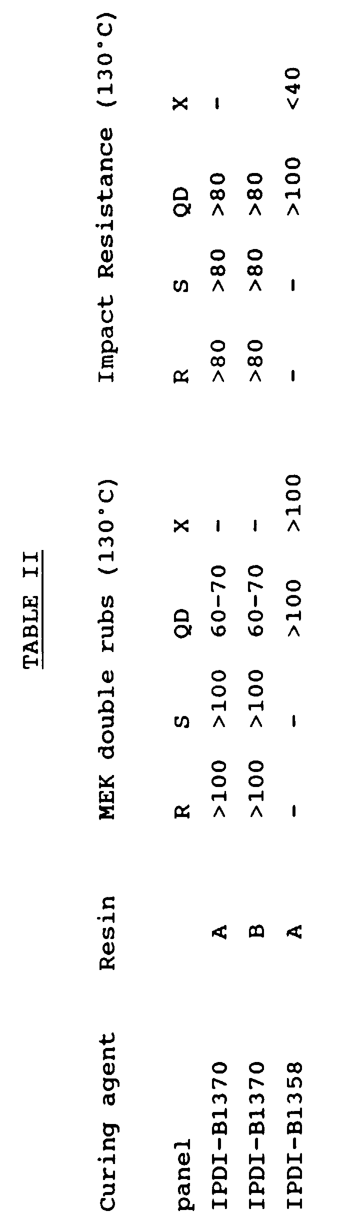

Excellent flow of all coatings made from binders A and B was established by visual inspection, all panels were covered by a very smooth, even distributed coating which adhered well to the metal surface.

## Claims

1. A process for preparing a thermoset resin composition by curing at a temperature of < 160°C a composition comprising:
a) a ketoxime-blocked isophorone diisocyanate in monomeric, dimeric or trimeric form, and
b) a water-soluble resin binder which is free from epoxy groups and which has the general formula A-B-(-C-B)ₘ-A, in which m is 1 to 6, A is a tertiary amino group, B is a divalent group of formula -D-O-R-O-(-D-O-R-O-)ₙ-D-, in which n is 0 to 10, D is a group of formula -CH₂-CH(OH)-CH₂- and R is the hydrocarbon residue of an aliphatic or aromatic dihydroxy compound, and C are the same or different divalent organic groups comprising one or two bridging secondary or tertiary amino group(s) linked to B, at least one of the said amino groups attached to C having the formula 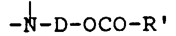 in which R' is C₄ to C₁₆ alkyl and D is as set out herein.

2. A process as claimed in claim 1 wherein the temperature applied lies in the range of from 120 to 140°C.

3. A process as claimed in claim 1 or 2 wherein compound a) is methylethylketoxime- or acetoxime-blocked isophorone diisocyanate.

4. A process as claimed in any one of claims 1 to 3, wherein of from 1 to 6 groups C per molecule are used.

5. A process as claimed in any one of claims 1 to 4 wherein groups B are used which are derived from a diglycidylether of a dihydric phenol.

6. A process as claimed in claim 5, wherein the phenol used is 2,2-di-(4-hydroxyphenyl)propane.

7. A process as claimed in claim 1, wherein groups A are used which are derived from sec. alkanol amines.

8. A process as claimed in claim 7, wherein the sec. alkanol amine used is diethanolamine.

9. A process as claimed in any one of claims 1 to 8, wherein group C used is derived from 1,6-diaminohexane.

10. A process as claimed in any one of claims 1 to 9, wherein of from 85 to 65 parts by weight of resin binder and of from 15 to 35 parts by weight of blocked isophorone diisocyanate are used.

11. A process as claimed in claim 1 comprising a tin-compound as curing catalyst.

12. A process as claimed in claim 11, wherein the catalyst used is dibutyl tin dilaurate.

13. A heat-curable thermosetting resin system for cathodic electrodeposition comprising:
a) a ketoxime-blocked isophorone diisocyanate in monomeric, dimeric or trimeric form, and
b) an aqueous solution of a water-soluble resin binder which is essentially free from epoxy groups and which has the general formula A-B-(-C-B)ₘ-A, in which m is 1 to 6, A is a tertiary amino group, B is a divalent group of formula -D-O-R-O-(-D-O-R-O-)ₙ-D-, in which n is 0 to 10, D is a group of formula -CH₂-CH(OH)-CH₂- and R is the hydrocarbon residue of an aliphatic or aromatic dihydroxy compound, and C are the same or different divalent organic groups comprising one or two bridging secondary or tertiary amino group(s) linked to B, at least one of the said amino groups attached to C having the formula 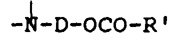 in which R' is C₄ to C₁₆ alkyl and D is as set out herein.

## Patentansprüche

1. Verfahren zur Herstellung einer Duroplastharzzusammensetzung durch Härten einer Zusammensetzung, enthaltend:
a) ein mit Ketoxim blockiertes Isophorondiisocyanat in monomerer, dimerer oder trimerer Form und
b) ein wasserlösliches Bindemittelharz, das frei von Epoxidgruppen ist und die allgemeine Formel A-B-(-C-B)ₘ-A besitzt, worin m 1 bis 6, A eine tertiäre Aminogruppe, B eine zweiwertige Gruppe der Formel -D-O-R-O-(-D-O-R-O-)ₙ-D-, worin n 0 bis 10 bedeutet, D eine Gruppe der Formel -CH₂-CH(OH)-CH₂- und R den Kohlenwasserstoffrest einer aliphatischen oder aromatischen Dihydroxyverbindung bedeuten, bedeuten und C für gleiche oder verschiedene zweiwertige organische Gruppen mit einer oder zwei mit B verbundenen verbrückenden sekundären oder tertiären Aminogruppen steht, wobei mindestens eine der an C gebundenen Aminogruppen die Formel 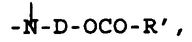 worin R' C₄- bis C₁₆-Alkyl bedeutet und D die obenangegebene Bedeutung hat, besitzt,
bei einer Temperatur < 160°C.

2. Verfahren nach Anspruch 1, bei dem man bei einer Temperatur im Bereich von 120 bis 140°C härtet.

3. Verfahren nach Anspruch 1 oder 2, bei dem man als Verbindung a) mit Methylethylketoxim oder Acetoxim blockiertes Isophorondiisocyanat einsetzt.

4. Verfahren nach einem der Ansprüche 1 bis 3, bei dem man 1 bis 6 Gruppen C pro Molekül einsetzt.

5. Verfahren nach einem der Ansprüche 1 bis 4, bei dem man von einem Diglycidylether eines zweiwertigen Phenols abgeleitete Gruppen B einsetzt.

6. Verfahren nach Anspruch 5, bei dem man als Phenol 2,2-Di-(4-hydroxyphenyl)propan einsetzt.

7. Verfahren nach Anspruch 1, bei dem man von sek.-Alkanolaminen abgeleitete Gruppen A einsetzt.

8. Verfahren nach Anspruch 7, bei dem man als sek.-Alkanolamin Diethanolamin einsetzt.

9. Verfahren nach einem der Ansprüche 1 bis 8, bei dem man eine von 1,6-Diaminohexan abgeleitete Gruppe C einsetzt.

10. Verfahren nach einem der Ansprüche 1 bis 9, bei dem man 85 bis 65 Gewichtsteile Bindemittelharz und 15 bis 35 Gewichtsteile blockiertes Isophorondiisocyanat einsetzt.

11. Verfahren nach Anspruch 1, bei dem man eine Zinnverbindung als Härtungskatalysator zusetzt.

12. Verfahren nach Anspruch 11, bei dem man als Katalysator Dibutylzinndilaurat einsetzt.

13. Hitzehärtbares Duroplastharzsystem zur kathodischen Elektrotauchlackierung, enthaltend:
a) ein mit Ketoxim blockiertes Isophorondiisocyanat in monomerer, dimerer oder trimerer Form und
b) eine wäßrige Lösung eines wasserlöslichen Bindemittelharzes, das im wesentlichen frei von Epoxidgruppen ist und die allgemeine Formel A-B-(-C-B)ₘ-A besitzt, worin m 1 bis 6, A eine tertiäre Aminogruppe, B eine zweiwertige Gruppe der Formel -D-O-R-O-(-D-O-R-O-)ₙ-D-, worin n 0 bis 10 bedeutet, D eine Gruppe der Formel - CH₂-CH(OH)-CH₂- und R den Kohlenwasserstoffrest einer aliphatischen oder aromatischen Dihydroxyverbindung bedeuten, bedeuten und C für gleiche oder verschiedene zweiwertige organische Gruppen mit einer oder zwei mit B verbundenen verbrückenden sekundären oder tertiären Aminogruppen steht, wobei mindestens eine der an C gebundenen Aminogruppen die Formel 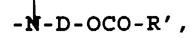 worin R' C₄- bis C₁₆-Alkyl bedeutet und D die obenangegebene Bedeutung hat, besitzt.

## Revendications

1. Procédé de préparation d'une composition de résine thermodurcie en durcissant, à une température inférieure à 160°C, une composition comprenant :
a) un diisocyanate d'isophorone bloqué à la cétoxime, sous forme monomérique, dimérique ou trimérique, et
b) un liant de résine hydrosoluble qui est dépourvu de radicaux époxy et qui répond à la formule générale A-B-(-C-B)ₘ-A, dans laquelle m a une valeur qui varie de 1 à 6, A représente un radical amino tertiaire, B représente un radical bivalent de la formule -D-O-R-O-(-D-O-R-O)ₙ-D-, dans laquelle n a une valeur qui varie de 0 à 10, D représente un radical de la formule -CH₂-CH(OH)-CH₂- et R est le reste hydrocarboné d'un composé dihydroxylé aliphatique ou aromatique et C sont les radicaux organiques bivalents, identiques ou différents, comprenant un ou deux groupes amino tertiaire ou secondaire de pontage, liés à B, au moins l'un desdits groupes amino attachés à C répondant à la formule 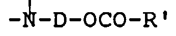 dans laquelle R' représente un groupe alkyle en C₄ à C₁₆ et D possède les significations qui lui ont été attribuées ci-dessus.

2. Procédé suivant la revendication 1, caractérisé en ce que la température appliquée varie de 120°C à 140°C.

3. Procédé suivant la revendication 1 ou 2, caractérisé en ce que le composé a) est le diisocyanate d'isophorone bloqué à la méthyléthylcétoxime ou l'acétoxime.

4. Procédé suivant l'une quelconque des revendications 1 à 3, caractérisé en ce que l'on utilise de 1 à 6 groupes C par molécule.

5. Procédé suivant l'une quelconque des revendications 1 à 4, caractérisé en ce que l'on utilise des groupes B qui proviennent d'un éther diglycidylique d'un phénol dihydroxylé.

6. Procédé suivant la revendication 5, caractérisé en ce que le phénol utilisé est le 2,2-di-(4-hydroxyphényl)propane.

7. Procédé suivant la revendication 1, caractérisé en ce que l'on utilise des groupes A qui proviennent d'alcanolamines secondaires.

8. Procédé suivant la revendication 7, caractérisé en ce que l'alcanolamine secondaire utilisée est la diéthanolamine.

9. Procédé suivant l'une quelconque des revendications 1 à 8, caractérisé en ce que le groupe C utilisé provient de 1,6-diaminohexane.

10. Procédé suivant l'une quelconque des revendications 1 à 9, caractérisé en ce que l'on utilise de 85 à 65 parties en poids de liant résineux et de 15 à 35 parties en poids de diisocyanate d'isophorone bloqué.

11. Procédé suivant la revendication 1, caractérisé en ce que l'on utilise un composé d'étain, à titre de catalyseur de durcissement.

12. Procédé suivant la revendication 11, caractérisé en ce que le catalyseur utilisé est le dilaurate de dibutylétain.

13. Système de résine thermodurcissable que l'on peut faire prendre à la chaleur pour l'électrodéposition cathodique, comprenant
a) un diisocyanate d'isophorone bloqué à la cétoxime, sous forme monomérique, dimérique ou trimérique et
b) un liant de résine hydrosoluble qui est dépourvu de radicaux époxy et qui répond à la formule générale A-B-(-C-B)ₘ-A, dans laquelle m a une valeur qui varie de 1 à 6, A représente un radical amino tertiaire, B représente un radical bivalent de la formule -D-O-R-O-(-D-O-R-O)ₙ-D-, dans laquelle n a une valeur qui varie de 0 à 10, D représente un radical de la formule -CH₂-CH(OH)-CH₂- et R est le reste hydrocarboné d'un composé dihydroxylé aliphatique ou aromatique et C sont les radicaux organiques bivalents, identiques ou différents, comprenant un ou deux groupes amino tertiaire ou secondaire de pontage, liés à B, au moins l'un desdits groupes amino attachés à C répondant à la formule 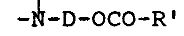 dans laquelle R' représente un groupe alkyle en C₄ à C₁₆ et D possède les significations qui lui ont été attribuées ci-dessus.
